# EUROPEAN PATENT SPECIFICATION

(11) **EP 1 818 824 B1**
(45) Date of publication and mention of the grant of the patent: **13.07.2016**
(21) Application number: 07105391.2
(22) Date of filing: 19.12.2001
(51) Int. Cl.: G06F 9/445

(54) **Improvements in and relating to communication terminals**
Verbesserungen an und in Zusammenhang mit Kommunikationsendgeräten
Améliorations de et associées à des terminaux de communication

(30) Priority: 21.12.2000 GB 0031368; 09.02.2001 US 267468 P
(43) Date of publication of application: 15.08.2007
(62) Divisional of application: 01995698.6
(73) Proprietor: Nokia Technologies Oy, 02610 Espoo (FI)
(72) Inventor: Aaltonen, Janne, FIN-20900, Turku (FI); Ikonen, Ari, FIN-21280, Raisio (FI); Koivunen, Tero, FIN-33720, Tampere (FI)
(74) Representative: Derry, Paul Stefan

(56) References cited:
- WO-A-00/36503
- US-A- 5 867 714
- US-A- 5 951 639

## Description

The present invention relates to software delivery apparatus. In particular, although not exclusively, the invention relates to communication terminals and the provision of software thereto, particularly, although not exclusively, operating system and application software.

Conventionally, communication terminals and in particular mobile terminals such as those telephony devices intended for connection to a Public Land Mobile Network (PLMN) have been delivered to an end user with a fully functioning operating system and applications such as calendar, calculator and the like already installed. The installation of such software on a terminal requires the manufacturer to perform exhaustive, expensive and often time consuming checks into the licensing conditions and copyright and other digital rights applicable to the software. Without such licensing and clearance activity the manufacturer is open to severe liability risks. Such risks will also arise where such activity is not properly or incompletely executed.

WO 00/36503 describes a software program that automatically and selectively transfers source computer software and configuration information to a target computer.

The invention is defined by the claims.

A terminal may be supplied to a user in a so-called thin implementation, that is with a set of software sufficient to permit the user to connect to the apparatus and carry out basic operations including the ability to request additional software. Advantageously, this permits a terminal manufacturer to restrict the implementation of software on his terminal to that which has been checked and determined to have no potential liability to the manufacturer. It is thus the responsibility of the terminal user to enter into appropriate agreements to obtain any additional software he requires for his terminal.

Clearly, the enhancement of a terminal from a thin implementation to a so-called thick implementation by the addition of further elements to that terminal is applicable to many forms of terminal and network topographies. Thus, a mobile communication handset could be enhanced in this manner via a PLMN acting as the access network for an ASP capable of delivering the desired elements. Equally, a Set Top Box (STB) intended for viewing television could be supplied in a thin implementation to a user who could then elect to enhance its capabilities such as to allow interaction with particular content. In this case the access network could be provided by a Public Switched Telephone Network (PSTN) providing the return channel between the STB and the content provider working in tandem with a digital video broadcast (DVB) network over which content is delivered to the STB.

To reduce the possibility of newly acquired software causing operational difficulties to the terminal, the apparatus may be capable of emulating a particular software configuration of the terminal. Advantageously, the terminal provides configuration information in tandem with the request for software. Such information may be utilised by the apparatus to generate an emulation specific to that particular terminal. The network connection to the apparatus also permits the derivation from a manufacturer of information relevant to a particular terminal which information could effect the operation of the terminal. Such information could relate to known problems or upgrades to the terminal not otherwise available from the terminal itself.

The method may be executed by an application service provider (ASP) independent of the terminal manufacturer or indeed the network operator of the terminal making the request. However, where terminal configuration information is available to a network operator, perhaps because the terminal is newly delivered to the user, a default ASP having details of initial terminal configurations may be set by the operator to which all such initial requests for software are directed. This would avoid the need for the terminal or more particularly the presence of software on the terminal necessary to provide configuration information to the ASP. Subsequently, if permitted by the operator and assuming the relevant software was present on the terminal the user could contact any ASP for further software. It will also be apparent that the method could be employed by the network operator itself.

In addition, the method may include carrying out an initial assessment of the software request to determine whether the software is appropriate for delivery with regard to the present configuration of the terminal making the request. Depending on the outcome it may be possible to suggest to the user of the terminal what additional software, if any, should be requested to allow his original request to be met. Such a step would provide a useful initial filter to avoid unnecessary failures during the subsequent terminal emulation step. As such it adds to the confidence of a user of the terminal that the software he is requesting will function correctly and perhaps more importantly not damage or otherwise adversely effect the existing operation of his terminal.

The software provider may be co-located with the controller in the sense that the software required by the user is sourced locally or from specified providers. This could be the case where the terminal forms part of a network in which its uses will be tightly constrained by the provider. For example, an operator of a Digital Video Broadcast (DVB) network may wish to restrict the delivery of enhanced interactivity components for its STBs to its own products for compatibility and/or commercial reasons. Alternatively, the user of a mobile terminal may wish to be free to install whatever software he chooses in which case the software provider could be selected on the basis of cost, for example, from a database of providers kept updated by the operator of the controller. Thus, the user is provided with a valuable opportunity to personalise his terminal.

In order to understand the present invention more fully, an embodiment thereof will now be described by way of example and with reference to the accompanying drawings, in which:
Figure 1 is a schematic view of a communication terminal architecture for use with the invention;

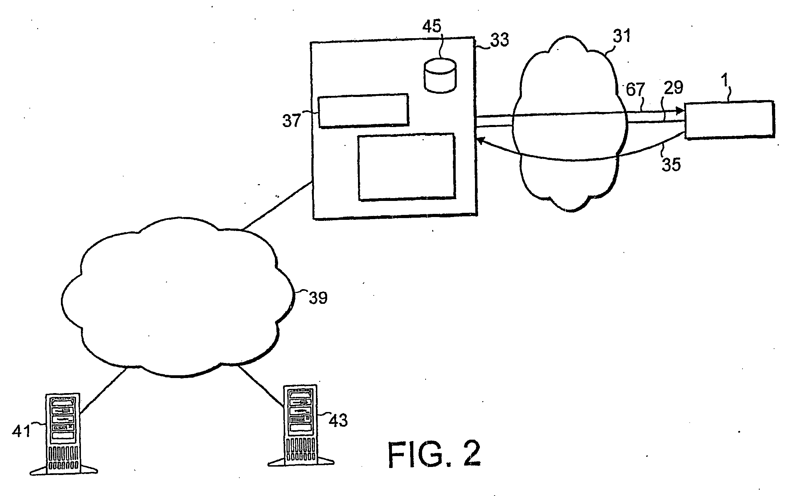

Figure 2 is a schematic view of software delivery system according to the invention; and
Figure 3 is detail schematic view of a terminal emulation portion of the system of Figure 2.

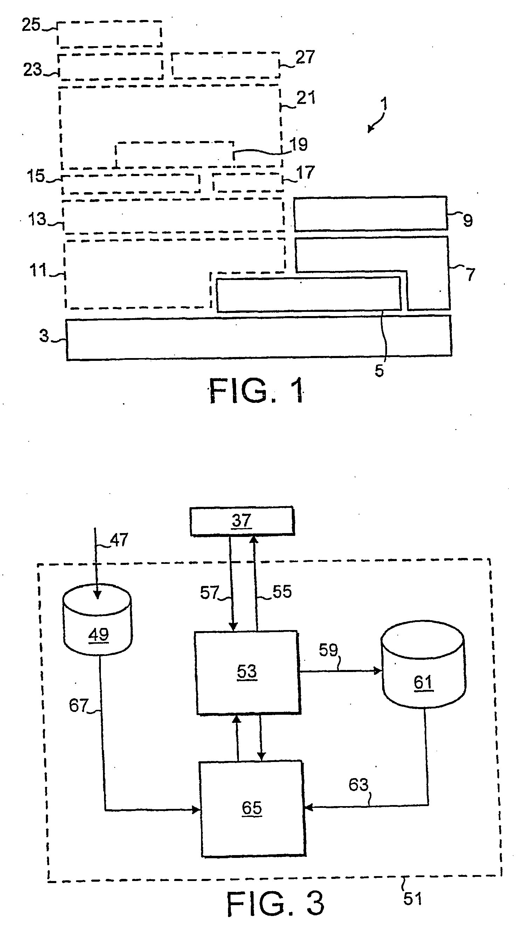

Referring to Figure 1, a communication terminal architecture 1 is shown in which elements of a so-called thin implementation are bounded with a solid line and further optional elements of a so-called thick implementation are bounded with a chain line. A first hardware layer 3, device driver layer 5, basic operating system 7 and native browser 9 form the thin implementation of the terminal. Included within the hardware layer are the entities required for a user to interact with the terminal and for the terminal to establish and maintain a connection with a network. The entities include those appropriate to a mobile and/or fixed terminal. As such entities are well known to those skilled in the art they will not be described further here except to the extent that they assist in understanding the present invention.

In addition to the elements making up the thin implementation of the terminal 1, sufficient additional memory and processing capacity exists to permit further elements to be added to the terminal 1 in a manner which will be described below, thereby enhancing the functionality of the terminal. Such elements may include an additional operating system 11, middle layer software 13 such as a modem application programming interface (API), Java (trade mark) native interface 15 and graphics 17, a Java (trade mark) virtual machine 19 within a Java (trade mark) implementation 21. A further API 23 provides a foundation for further applications 25. A Java (trade mark) browser 27 may also be included.

A terminal 1 is manufactured and supplied to a user in a thin implementation. Thus, the user is provided with the basic functionality necessary to allow him to establish a connection 29 to a network 31 with which he has a service agreement. Once connected to the network 31, the native browser 9 permits the user to access an Application Service Provider (ASP) 33 capable of supplying additional elements of the terminal architecture to the connected terminal 1. The terminal manufacturer or network operator may predefine the selection of the ASP. Alternatively or perhaps additionally, the user may be free to select a desired ASP.

Once the terminal 1 has accessed the ASP 33, a request 35 from a user for an element of the terminal architecture is transmitted over the network 31. In addition to identifying the desired element or elements, the request contains information setting out the current configuration of the terminal architecture. The ASP receives the request and either creates or updates a user profile 37 for that terminal 1 which may be supplemented by information provided by a manufacturer and/or network operator of the terminal 1. Such additional information could, in the case of the manufacturer relate to software versions relevant to particular terminals which data may be too lengthy or sensitive to store in the terminal 1 itself. The additional information provided by the operator could identify the services the user subscribes to which might have a bearing on the desirability or otherwise of certain elements of the terminal architecture. Such services might, for example, require the presence of a particular browser or application to access interactive content over a broadband digital broadcast network. In order that the ASP 33 may correctly correlate such additional information with a request 35 from a particular terminal 1 to which it is relevant, some form of identifier common to both the terminal 1 and the additional information would be required. This might take the form of a serial number or IPv6 address range, for example.

The ASP 33 may also analyse the profile 37 and determine from that analysis whether the selected element is appropriate in view of the existing configuration of that terminal. For example, the ASP 33 could recognise that the delivery of a Java (trade mark) browser 27 is inappropriate where the terminal 1 is in a thin condition due to the absence of the intermediate software layers. A database 45 holding details of software elements corresponding to the different requirements of various terminals provides the ASP 33 with the ability to identify what elements are required to achieve certain terminal configurations. The database also maintains a list of provider addresses where such elements may be sourced. Such a list will be updated regularly to reflect changes in availability and cost to the ASP 33. A response could then be made by the ASP 33 to the terminal 1 indicating that the request cannot be validated and suggesting the delivery of the appropriate additional elements of the layers necessary to support the desired element.

Once the request has 35 has been received, the user profile 37 determined and the request validated against the profile, the ASP 33 commences sourcing of the desired element or elements subject to any restriction in place from the user profile 37 and in accordance with provider address provided by the database 45. Thus, the ASP 33 contacts via the Internet 39 one or more software providers 41,43. In the event that the desired element is open source or otherwise free of royalty constraints an appropriate provider 41 should deliver the element to the ASP 33. On the other hand, where a payment is required for supply of the desired element, this will be negotiated between the ASP 33 and the provider 43 with the ASP 33 eventually remitting the cost to the terminal user through a suitable mechanism, credit card payment, billing to the user's network operator are some examples.

The new element supplied to the ASP 33 by the provider 41,43 is not immediately delivered to the terminal 1 but is placed 47 into a cache 49 forming part of a terminal emulation environment 51. The element is held within the cache 49 whilst an emulation controller 53 requests 55 the user profile 37 appropriate to the terminal 1 for which the element is destined. Details of the profile 37 are returned 57 to the controller 53. Whereupon, the controller 53 generates a request 59 which is received by a store 61 holding a plurality of software blocks at least some of which, in response to the request 59, may be built up into an emulation of the terminal 1 as defined by the profile 37. These blocks are delivered 63 from the store 61 to a emulation space 65 where the emulation is built following which the new element is copied 67 from the cache 49 to the emulation space 65 in a manner analogous to the delivery method by which the element should eventually reach the terminal 1. The controller 53 is then able to carry out diagnostic checks on the emulation within the space 65 with a view to validating the proposed terminal configuration. Assuming the tests are successful the new element may be delivered via the access network to the terminal where its is installed. Otherwise, the ASP 33 will, in response to a failure during validation, indicate to the terminal that the new element has not been validated with the present terminal configuration together with an indication of the reason for non-validation. Where appropriate, the ASP 33 may suggest possible options which could be carried out in relation to the present terminal configuration to allow validated delivery of the element.

## Claims

1. Software delivery apparatus (33) comprising a controller operable:
to receive a request originating from a terminal, said request identifying a software element for delivery to said terminal;
to determine a configuration of said terminal;
to determine, based on the configuration of said terminal, whether said requested software element is appropriate for delivery;
to be responsive to determining that said requested software element is not appropriate for delivery to identify one or more additional software elements required by said terminal to enable said terminal to support said requested software element; and
to source said one or more additional software elements and said requested software element for delivery to said terminal.

2. Apparatus as claimed in claim 1, wherein the controller is operable to generate a user a profile in response to a determination of a configuration of said terminal.

3. Apparatus as claimed in claim 2, wherein the controller is operable to supplement said profile using information provided by a manufacturer of said terminal.

4. Apparatus as claimed in claim 2 or claim 3, wherein the controller is operable to supplement said profile using information provided by an operator of network of which said terminal is a member.

5. Apparatus as claimed in any one of claims 2 to 4, wherein the controller is operable to determine whether said requested software element is appropriate for delivery, based on said user profile.

6. Apparatus as claimed in any one of claims 1 to 5, said controller being operable to identify said one or more additional software elements by being operable:
to access a database holding details of software elements corresponding to the different requirements of various terminals; and
to identify what software elements are required to achieve certain terminal configurations.

7. Apparatus as claimed in any one of claims 1 to 6, wherein the controller is operable to access a database maintaining a list of provider addresses where software elements may be sourced.

8. A method of operation of a software delivery apparatus (33), the method comprising:
receiving a request originating from a terminal, said request identifying a software element for delivery to said terminal;
determining a configuration of said terminal;
determining, based on the configuration of said terminal, whether said requested software element is appropriate for delivery;
in response to determining that said requested software element is not appropriate for delivery, identifying one or more additional software elements required by said terminal to enable said terminal to support said requested software element; and
sourcing said one or more additional software elements and said requested software element for delivery to said terminal.

9. A method as claimed in claim 8, further comprising generating a user a profile in response to determining a configuration of said terminal.

10. A method as claimed in claim 9, further comprising supplementing said profile using information provided by a manufacturer of said terminal.

11. A method as claimed in claim 9 or claim 10, further comprising supplementing said profile using information provided by an operator of network of which said terminal is a member.

12. A method as claimed in any one of claims 9 to 11, comprising determining whether said requested software element is appropriate for delivery, based on said user profile.

13. A method as claimed in any one of claims 8 to 11, wherein identifying said one or more additional software elements comprises:
accessing a database holding details of software elements corresponding to the different requirements of various terminals; and
identifying what software elements are required to achieve certain terminal configurations.

14. A method as claimed in any one of claims 8 to 13, further comprising accessing a database maintaining a list of provider addresses where software elements may be sourced.

## Patentansprüche

1. Softwareliefergerät (33), das eine Steuervorrichtung umfasst, die betreibbar ist, um eine Anfrage zu empfangen, die von einem Endgerät ausgeht, wobei die Anfrage ein Softwareelement zum Liefern zu dem Endgerät identifiziert,
eine Konfiguration des Endgeräts zu bestimmen, basierend auf der Konfiguration des Endgeräts zu bestimmen, ob das angefragte Softwareelement zur Lieferung geeignet ist,
auf das Bestimmen zu reagieren, dass das angefragte Softwareelement nicht zur Lieferung geeignet ist, um ein oder mehrere zusätzliche Softwareelemente, die von dem Endgerät benötigt werden, zu identifizieren, um es dem Endgerät zu ermöglichen, das angefragte Softwareelement zu unterstützen, und
das eine oder die mehreren zusätzlichen Softwareelemente und das angefragte Softwareelement zur Lieferung an das Endgerät zu beschaffen.

2. Gerät nach Anspruch 1, wobei die Steuervorrichtung betreibbar ist, um ein Benutzerprofil als Reaktion auf eine Bestimmung einer Konfiguration des Endgeräts zu erzeugen.

3. Gerät nach Anspruch 2, wobei die Steuervorrichtung betreibbar ist, um das Profil unter Verwenden von Informationen, die von einem Hersteller des Endgeräts bereitgestellt werden, zu ergänzen.

4. Gerät nach Anspruch 2 oder Anspruch 3, wobei die Steuervorrichtung betreibbar ist, um das Profil unter Verwenden von Informationen, die von einem Netzwerkbetreiber, bei dem das Endgerät ein Mitglied ist, bereitgestellt werden, zu ergänzen.

5. Gerät nach einem der Ansprüche 2 bis 4, wobei die Steuervorrichtung betreibbar ist, um zu bestimmen, ob das angefragte Softwareelement zur Lieferung geeignet ist, basierend auf dem Benutzerprofil.

6. Gerät nach einem der Ansprüche 1 bis 5, wobei die Steuervorrichtung betreibbar ist, um das eine oder die mehreren zusätzlichen Softwareelemente zu identifizieren, indem es betrieben werden kann, um:
auf eine Datenbank zuzugreifen, die Einzelheiten von Softwareelementen enthält, die den verschiedenen Anforderungen diverser Endgeräte entsprechen, und
zu identifizieren, welche Softwareelemente erforderlich sind, um bestimmte Endgerätkonfigurationen zu verwirklichen.

7. Gerät nach einem der Ansprüche 1 bis 6, wobei die Steuervorrichtung betreibbar ist, um auf eine Datenbank zuzugreifen, die eine Liste von Anbieteradressen führt, wo Softwareelemente beschafft werden können.

8. Verfahren zum Betreiben eines Softwareliefergeräts (33), wobei das Verfahren Folgendes umfasst:
Empfangen einer Anfrage, die von einem Endgerät ausgeht, wobei die Anfrage ein Softwareelement zum Liefern zu dem Endgerät identifiziert,
Bestimmen einer Konfiguration des Endgeräts,
basierend auf der Konfiguration des Endgeräts, Bestimmen, ob das angefragte Softwareelement zur Lieferung geeignet ist,
als Reaktion auf das Bestimmen, dass das angefragte Softwareelement nicht zur Lieferung geeignet ist, Identifizieren eines oder mehrerer zusätzlicher Softwareelemente, die von dem Endgerät benötigt werden, um es dem Endgerät zu ermöglichen, das angefragte Softwareelement zu unterstützen, und
Beschaffen des einen oder der mehreren zusätzlichen Softwareelemente und des angefragten Softwareelements zur Lieferung an das Endgerät.

9. Verfahren nach Anspruch 8, das ferner das Erzeugen eines Benutzerprofils als Reaktion auf das Bestimmen einer Konfiguration des Endgeräts umfasst.

10. Verfahren nach Anspruch 9, das ferner das Ergänzen des Profils unter Verwenden von Informationen, die von einem Hersteller des Endgeräts bereitgestellt werden, umfasst.

11. Verfahren nach Anspruch 9 oder Anspruch 10, das ferner das Ergänzen des Profils unter Verwenden von Informationen, die von einem Netzwerkbetreiber, bei dem das Endgerät ein Mitglied ist, bereitgestellt werden, umfasst.

12. Verfahren nach einem der Ansprüche 9 bis 11, das das Bestimmen, ob das angefragte Softwareelement zur Lieferung geeignet ist, basierend auf dem Benutzerprofil umfasst.

13. Verfahren nach einem der Ansprüche 8 bis 11, wobei das Identifizieren des einen oder der mehreren zusätzlichen Softwareelemente Folgendes umfasst:
Zugreifen auf eine Datenbank, die Einzelheiten von Softwareelementen, die den verschiedenen Anforderungen diverser Endgeräte entsprechen, enthält, und
Identifizieren, welche Softwareelemente erforderlich sind, um bestimmte Endgerätkonfigurationen zu verwirklichen.

14. Verfahren nach einem der Ansprüche 8 bis 13, das ferner das Zugreifen auf eine Datenbank umfasst, die eine Liste von Anbieteradressen führt, wo Softwareelemente beschafft werden können.

## Revendications

1. Appareil de livraison de logiciels (33) comprenant un contrôleur permettant de :
recevoir une requête émise à partir d'un terminal, ladite requête identifiant un élément logiciel pour une livraison au dit terminal ;
déterminer une configuration dudit terminal ;
déterminer, en fonction de la configuration dudit terminal, si ledit élément logiciel demandé est approprié pour une livraison ;
répondre à la détermination que ledit élément logiciel demandé n'est pas approprié pour une livraison afin d'identifier un ou plusieurs éléments logiciels additionnels requis par ledit terminal pour permettre au dit terminal de prendre en charge ledit élément logiciel demandé ; et
rechercher lesdits un ou plusieurs éléments logiciels additionnels et ledit élément logiciel demandé pour une livraison au dit terminal.

2. Appareil selon la revendication 1, dans lequel le contrôleur permet de générer un profil utilisateur en réponse à une détermination d'une configuration dudit terminal.

3. Appareil selon la revendication 2, dans lequel le contrôleur permet de compléter ledit profil en utilisant des informations fournies par un fabriquant dudit terminal.

4. Appareil selon la revendication 2 ou la revendication 3, dans lequel le contrôleur permet de compléter ledit profil en utilisant des informations fournies par un opérateur du réseau dont ledit terminal est un membre.

5. Appareil selon l'une quelconque des revendications 2 à 4, dans lequel le contrôleur permet de déterminer si ledit élément logiciel demandé est approprié pour une livraison, en fonction dudit profil utilisateur.

6. Appareil selon l'une quelconque des revendications 1 à 5, ledit contrôleur permettant d'identifier lesdits un ou plusieurs éléments logiciels additionnels par les actions suivantes :
accéder à une base de données contenant des détails d'éléments logiciels correspondant aux différentes exigences de divers terminaux ; et
identifier quels éléments logiciels sont requis pour réaliser certaines configurations de terminaux.

7. Appareil selon l'une quelconque des revendications 1 à 6, dans lequel le contrôleur permet d'accéder à une base de données maintenant une liste d'adresses de fournisseurs auprès desquels des éléments logiciels peuvent être obtenus.

8. Procédé d'exploitation d'un appareil de livraison de logiciels (33), le procédé comprenant les étapes suivantes :
recevoir une requête émise à partir d'un terminal, ladite requête identifiant un élément logiciel pour une livraison au dit terminal ;
déterminer une configuration dudit terminal ;
déterminer, en fonction de la configuration dudit terminal, si ledit élément logiciel demandé est approprié pour une livraison ;
être réactif à la détermination que ledit élément logiciel demandé n'est pas approprié pour une livraison, identifier un ou plusieurs éléments logiciels additionnels requis par ledit terminal pour permettre au dit terminal de prendre en charge ledit élément logiciel demandé ; et
rechercher lesdits un ou plusieurs éléments logiciels additionnels et ledit élément logiciel demandé pour une livraison au dit terminal.

9. Procédé selon la revendication 8, comprenant en outre : générer un profil utilisateur en réponse à une détermination d'une configuration dudit terminal.

10. Procédé selon la revendication 9, comprenant en outre : compléter ledit profil en utilisant des informations fournies par un fabriquant dudit terminal.

11. Procédé selon la revendication 9 ou la revendication 10, comprenant en outre : compléter ledit profil en utilisant des informations fournies par un opérateur du réseau dont ledit terminal est un membre.

12. Procédé selon l'une quelconque des revendications 9 à 11, comprenant : déterminer si ledit élément logiciel demandé est approprié pour une livraison, en fonction dudit profil utilisateur.

13. Procédé selon l'une quelconque des revendications 8 à 11, dans lequel l'étape consistant à identifier lesdits un ou plusieurs éléments logiciels additionnels comprend :
accéder à une base de données contenant des détails d'éléments logiciels correspondant aux différentes exigences de divers terminaux ; et
identifier quels éléments logiciels sont requis pour réaliser certaines configurations de terminaux.

14. Procédé selon l'une quelconque des revendications 8 à 13, comprenant en outre : accéder à une base de données maintenant une liste d'adresses de fournisseurs auprès desquels des éléments logiciels peuvent être obtenus.
